(19) Europäisches Patentamt

European Patent Office

Office européen des brevets

(11) **EP 0 991 953 B1**

(12) **FASCICULE DE BREVET EUROPEEN**

(45) Date de publication et mention
de la délivrance du brevet:
**10.09.2003 Bulletin 2003/37**

(21) Numéro de dépôt: **98935093.9**

(22) Date de dépôt: **03.07.1998**

(51) Int Cl.⁷: **G01S 13/34**

(86) Numéro de dépôt international:
**PCT/FR98/01427**

(87) Numéro de publication internationale:
**WO 99/001782 (14.01.1999 Gazette 1999/02)**

(54) **PROCEDE DE LEVEE D'AMBIGUITE SUR LES MESURES EN DISTANCE EFFECTUEE PAR UN RADAR**

VERFAHREN ZUR MEHRDEUTIGKEITSAUFLÖSUNG DER ENTFERNUNGSMESSUNGEN EINES RADARS

METHOD FOR AMBIGUITY PROCESSING ON DISTANCE MEASUREMENTS CARRIED OUT BY RADAR

(84) Etats contractants désignés:
**BE DE ES FR GB IT SE**

(30) Priorité: **04.07.1997 FR 9708508**

(43) Date de publication de la demande:
**12.04.2000 Bulletin 2000/15**

(73) Titulaire: **Thales
75008 Paris (FR)**

(72) Inventeurs:
• **KEMKEMIAN, Stéphane, Thomson-CSF
Propriété Intell.
94117 Arcueil Cedex (FR)**
• **ARTIS, Jean-Paul, Thomson-CSF Propriété
Intell.
94117 Arcueil Cedex (FR)**

(74) Mandataire: **Lucas, Laurent Jacques et al
THALES Intellectual Property,
31-33 Avenue Aristide Briand
94117 Arcueil Cedex (FR)**

(56) Documents cités:
**EP-A- 0 359 911          US-A- 3 898 655
US-A- 4 203 113**

# Description

La présente invention concerne un procédé de levée d'ambiguïté sur les mesures en distance effectuées par un radar. Elle s'applique notamment à des radars à onde continue dont la fréquence du signal émis est alternativement commutée entre au moins deux fréquences. Elle peut par ailleurs être appliquée à des radars équipant des automobiles et plus généralement à des radars nécessitant une réalisation à faible coût.

Un radar pour véhicules automobiles destiné à la régulation du trafic routier doit notamment détecter et localiser le plus proche véhicule dans la voie du véhicule porteur. Il est notamment important que les mesures de distances sur les cibles détectées soient obtenues avec la meilleure précision. En particulier, il faut éviter que des cibles lointaines de fortes surfaces équivalentes radar fournissent des mesures de distances ambiguës erronées pouvant être confondues avec celles de cibles utiles plus proches. Un radar pour automobiles peut par exemple émettre un signal dont la fréquence est commutée alternativement entre deux fréquences. Cette commutation a pour principal objectif de permettre de mesurer la distance de chaque cible détectée puisque le déphasage différentiel dû à la propagation entre les signaux émis respectivement à la première fréquence $F_1$ et la deuxième fréquence $F_2$ est proportionnel à la distance. Dans la mise en oeuvre classique d'un tel radar, les signaux reçus sont aiguillés, en synchronisme avec l'émission, sur deux voies de réception de manière à ce que :

- les signaux traités dans la première voie ne proviennent que de séquences d'émission à la première fréquence $F_1$ ;
- les signaux traités dans la deuxième voie ne proviennent que de séquences d'émission à la deuxième fréquence $F_2$.

Dans ces conditions, la mesure de la phase différentielle $\Delta\varphi$ entre les signaux correspondant à une cible donnée et issus de chacune des deux voies fournit une mesure de la distance D de cette cible par l'intermédiaire de la relation suivante, c représentant la vitesse de la lumière et $\Delta F$ la différence entre les deux fréquences :

$$D = \frac{c}{2(F_2\text{-}F_1)} \times \frac{\Delta\varphi}{2\pi} = \frac{c}{\Delta F} \times \frac{\Delta\varphi}{2\pi} \qquad (1)$$

Or il est connu qu'une mesure de phase possède une ambiguïté de $2\pi$ si le signal reçu est restitué en bande de base sous son expression complexe, dans le cas d'utilisation d'un mélangeur hyperfréquence à bande latérale unique c'est-à-dire de type BLU, ou que cette mesure de phase possède une ambiguïté de $\pi$ si le signal est restitué en bande de base par une transposition à double bande latérale, dans le cas d'utilisation d'un simple mélangeur. Dans ce dernier cas, un traitement Doppler est nécessaire pour séparer les deux bandes latérales correspondant à une ambiguïté sur le signe de la vitesse.

Une mesure de distance n'est ainsi exploitable que dans le domaine de distance où elle fournit une mesure non ambiguë, c'est-à-dire sur un domaine de distances $D_{a2}$ définies par la relation suivante, si la phase est ambiguë sur $2\pi$ :

$$D_{a2} = \frac{c}{2(F_2\text{-}F_1)} \qquad (2)$$

ou sur un domaine de distances $D_{a1}$ définies par la relation suivante, si la phase est ambiguë sur $\pi$ :

$$D_{a1} = \frac{c}{4(F_2\text{-}F_1)} \qquad (3)$$

Pour un rapport signal sur bruit donné, donc un bruit de phase donné, la précision de mesure de distance est d'autant meilleure que la différence de fréquence $\Delta F = F_2 - F_1$ est élevée. En contrepartie, le domaine de mesure non ambigu est réduit. Cela est surtout significatif si la phase est ambiguë à $\pi$ près comme le montre une comparaison des relations (2) et (3), c'est-à-dire dans le cas d'utilisation d'un simple mélangeur. Ce cas concerne par exemple les applications automobiles ou qui exigent notamment de faibles coût de réalisation.

Un brevet US 3.766.554 expose un procédé applicable à des radars à onde continue bi-fréquence qui permet de rejeter les échos situés au-delà d'une certaine distance.

Le but de l'invention est notamment de pallier cet inconvénient, c'est-à-dire de permettre des mesures de distances sur des domaines non ambigus significativement plus étendus que ceux définis par les relations précédentes (2) et (3), cela en jouant notamment sur la fenêtre de réception de l'onde reçue ou sur la forme de l'onde émise. A cet effet, l'invention a pour objet un procédé de levée d'ambiguïté sur les mesures en distance effectuée par un radar, caractérisé en ce que le radar émettant un signal commuté entre une première fréquence et une deuxième fréquence et recevant les signaux renvoyés par une cible sur deux voies de réception associées chacune à une fréquence, les mesures étant réalisée à partir de la différence de phase entre les signaux présents sur chacune des voies, chaque voie reçoit un signal dont la fréquence moyenne est comprise entre la première et la deuxième fréquence, à la fréquence Doppler près de la cible.

Outre l'extension du domaine sans ambiguïté, l'invention a pour principaux avantages qu'elle s'adapte à plusieurs types de réception, qu'elle est simple à mettre en oeuvre et qu'elle est économique.

D'autres caractéristiques et avantages de l'Invention apparaîtront à l'aide de la description qui suit faite en regard de dessins annexés qui représentent :

- la figure 1, la succession dans le temps des émissions à l'une ou l'autre des deux fréquences F1, F2 et des fenêtres de réception des signaux reçus correspondant, selon l'art antérieur ;
- la figure 2, une illustration de distance d'ambiguïté relativement à un chronogramme selon la figure 1 ;
- la figure 3, par un synoptique un exemple de radar auquel l'invention peut être appliquée ;
- la figure 4, un exemple selon l'invention, de positionnements dans le temps des émissions à l'une puis à l'autre des deux fréquences F1, F2 et des fenêtres de réception des signaux reçus correspondant ;
- la figure 5, un exemple d'effet obtenu sur le déphasage entre le signal relatif à une fréquence F1 et le signal relatif à l'autre fréquence F2 relativement au chronogramme de la figure 4 ;
- la figure 6, un exemple de forme d'onde émise selon l'invention ;
- la figure 7, un exemple d'allure de distance estimée, selon l'invention, en fonction de la distance réelle.

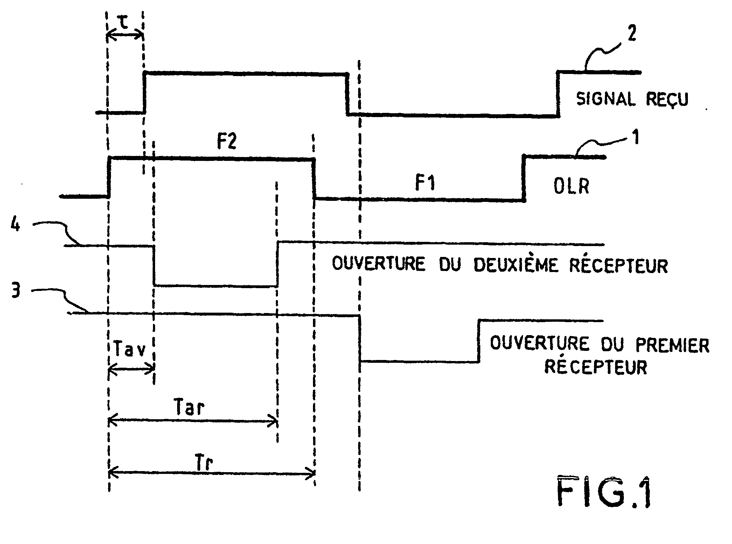

La figure 1 illustre par un chronogramme les formes d'ondes en jeu pour un radar selon l'art antérieur à onde continue dont la fréquence du signal émis est alternativement commutée entre deux fréquences F1 et F2. Plus particulièrement, elle illustre la succession dans le temps des émissions à l'une ou l'autre des deux fréquences F1, F2 et des fenêtres de réception des signaux reçus correspondant. Une première courbe 1 représente en fonction du temps la fréquence du signal fourni par l'oscillateur local pour la réception. Dans le cas d'un récepteur de type homodyne cette courbe 1 représente aussi la fréquence du signal émis. La durée d'émission à la première fréquence F1 ou à la deuxième fréquence F2 est égale à un temps donné Tr . Une deuxième courbe 2 représente en fonction du temps la fréquence d'un signal reçu. Cette deuxième courbe 2 est décalée d'un temps τ donné par rapport à la première courbe 1, en ce qui concerne les variations de fréquence, les fréquences F1, F2 étant cependant augmentées d'une fréquence Doppler. Le temps τ représente donc le retard entre un signal émis et le signal reçu correspondant. Une troisième courbe 3 et une quatrième courbe 4 représentent respectivement les moments d'ouverture de la première voie de réception associée à la première fréquence F1 et de la deuxième voie de réception associée à la deuxième fréquence F2. Une voie de réception est ouverte lorsque sa fréquence associée est émise, la voie ouvrant un temps relatif $T_{av}$ après l'établissement de la fréquence et fermant à un temps Tar, ou retard à la fermeture, après ce même établissement. Les trois temps précités vérifient la relation

suivante:

$$Tav < Tar < Tr \qquad (4)$$

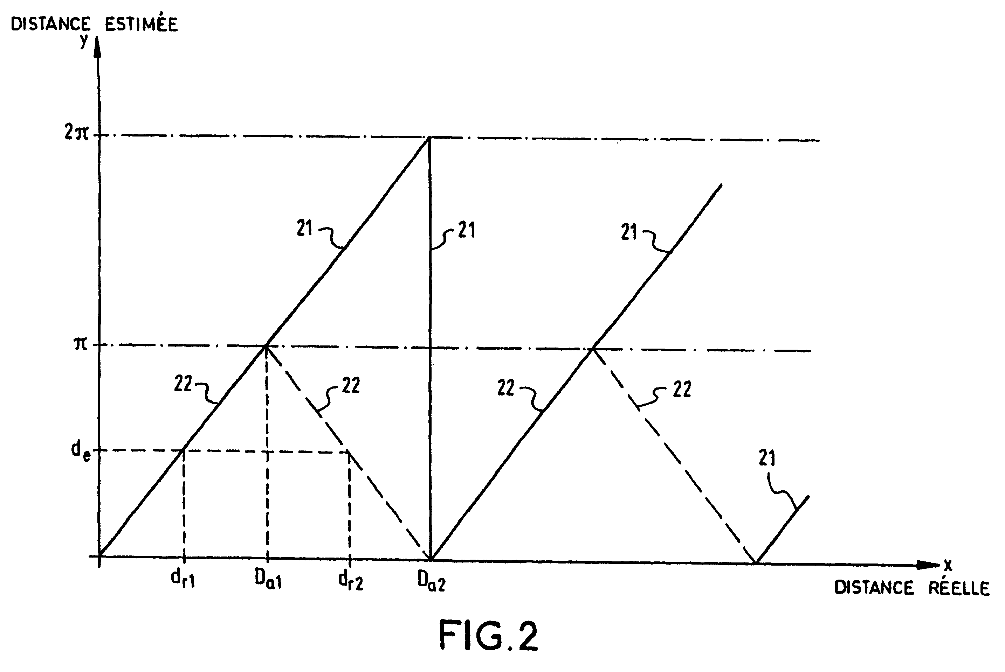

La figure 2 illustre les domaines d'ambiguïté $D_{a2}$ et $D_{a1}$ précités et définis selon les relations (2) et (3). L'axe des abscisses x représente la distance réelle d'une cible au radar et l'axe des ordonnées y représente cette distance estimée par le radar selon la relation (1). Cette distance estimée est directement proportionnelle au déphasage φ entre le signal reçu correspondant à la première fréquence F1 et le signal reçu correspondant à la deuxième fréquence F2, en conséquence l'axe des ordonnées peut donc aussi être assimilé à ce déphasage φ. Une première courbe 21 représente la distance estimée en fonction de la distance réelle dans le cas d'une ambiguïté à $2\pi$ près. Une deuxième courbe 22 représente la distance estimée en fonction de la distance réelle dans le cas d'une ambiguïté à $\pi$ près. En pratique les ambiguïtés les plus gênantes se situent pour deux distances estimées relativement proches, en effet dans le cas où une mesure estimée correspond à une distance proche et à une distance très éloignée, cette dernière sera facilement supprimée comme étant par exemple hors de la portée du radar. Comme le montre la deuxième courbe 22 de la figure 2, c'est surtout les cas d'une mesure $d_e$ ambiguës à $\pi$ près qui posent problème, car elles peuvent correspondre à des distances réelles $d_{r1}$, $d_{r2}$ relativement rapprochées, toutes deux comprises dans la portée du radar. Dans un cas classique, il peut être cependant toujours possible de rejeter la distance la plus éloignée $d_{r2}$ comme correspondant à un signal reçu de trop faible puissance. Néanmoins, dans une application automobile par exemple où les surfaces équivalentes radar SER peuvent varier considérablement d'une cible à l'autre, la deuxième distance $d_{r2}$ ne peut plus être rejetée simplement en considérant la puissance reçue. En effet, dans ce cas pour une puissance reçue relativement faible, la distance estimée $d_e$ peut correspondre par exemple à une moto de faible SER à la première distance $d_{r1}$ ou à un gros camion de grande SER à la deuxième distance $d_{r2}$ plus éloignée.

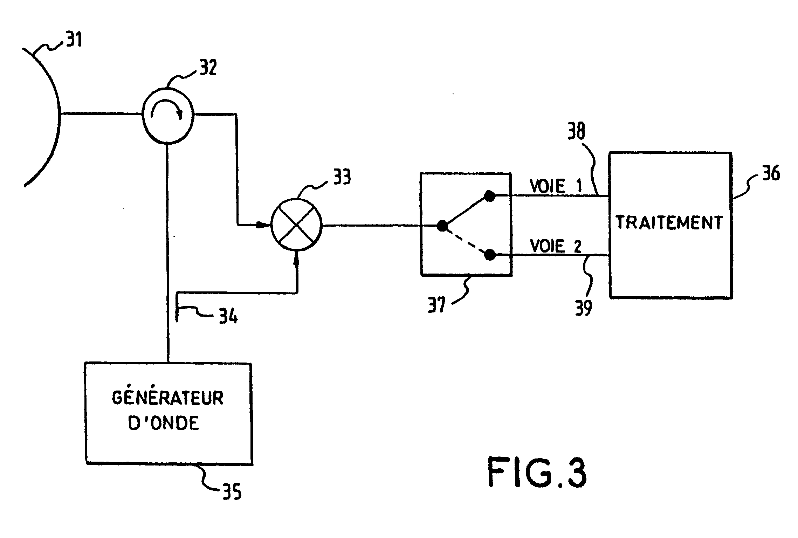

La figure 3 présente par un synoptique un exemple de radar auquel l'invention peut être appliquée. Le signal reçu de l'antenne 31 est transmis via un circulateur 32 à l'entrée d'un mélangeur 33 dont l'autre entrée reçoit un signal de démodulation, fourni par exemple via un coupleur 34 par le générateur d'onde d'émission 35 dans le cas d'une réception homodyne. La sortie du mélangeur 33 restitue un signal à des moyens de traitement 36. Entre le mélangeur 33 et les moyens de traitement est intercalé un commutateur 37 qui relie successivement le mélangeur à une première voie de réception 38, destinée à recevoir les signaux relatifs à la première fréquence d'émission F1, et à une deuxième voie de réception 39, destinée à recevoir les signaux relatifs à la deuxième fréquence d'émission F2. Les deux voies de réception fournissent ensuite leurs signaux aux moyens de traitements 36 qui traitent chacun de ces signaux. Ces moyens 36 calculent notamment la distance estimée selon la relation (1).

Le mélangeur 33 est par exemple un simple mélangeur. Dans ce cas, il restitue le signal reçu sous forme réelle et les mesures de phase ne peuvent être exploitées que sur l'intervalle d'ambiguïté $[0, \pi]$ puisqu'il y a ambiguïté entre les deux demi-cercles de phase et le signe de la vitesse. Dans le cas d'utilisation d'un mélangeur de type BLU, c'est-à-dire à bande latérale unique, le signal reçu est restitué sous son expression complexe et les mesures de phase peuvent être exploitées sur l'intervalle maximum d'ambiguïté $[0, 2\pi]$. Un mélangeur de type BLU a notamment comme inconvénient d'être coûteux et par là même peu adapté à des applications de masse telles que l'automobile.

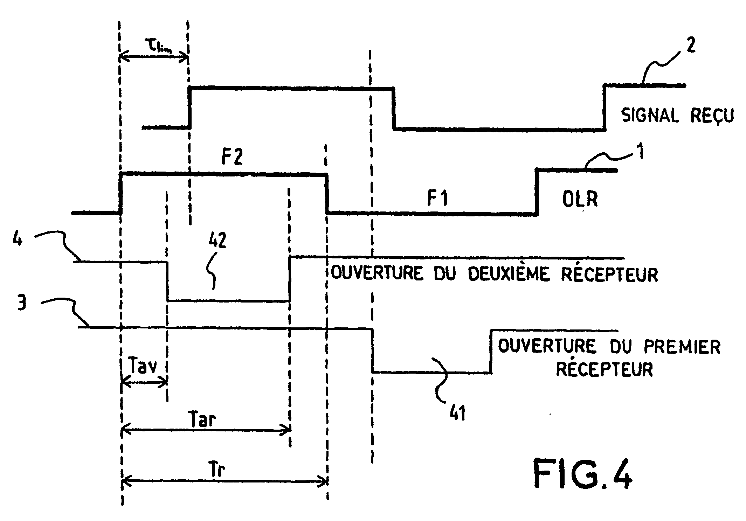

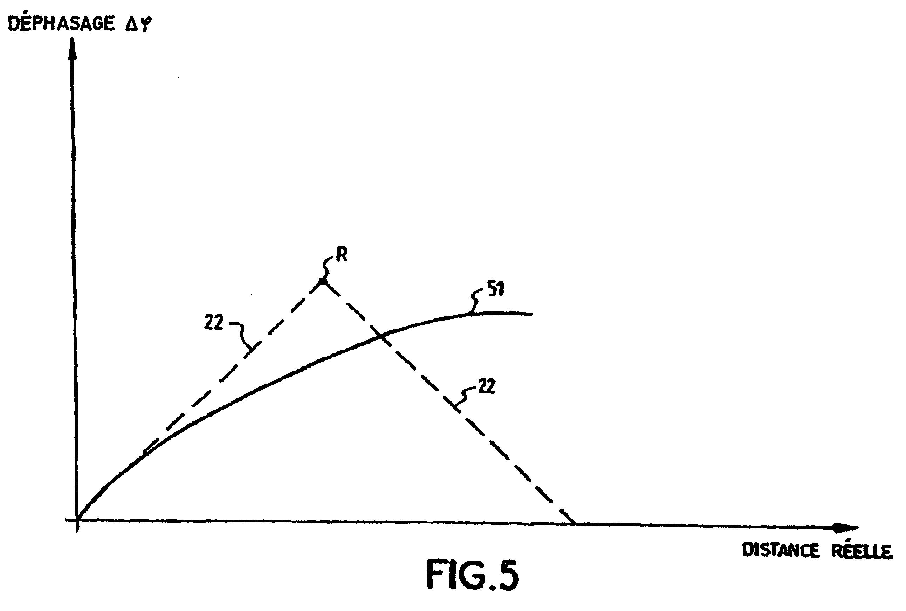

Les figures 4 et 5 illustrent le principe de fonctionnement d'un radar selon l'invention. La figure 4 illustre un exemple de positionnements dans le temps des émissions à l'une puis à l'autre des deux fréquences F1, F2 et des fenêtres de réception des signaux reçus correspondant. La figure 5 illustre un exemple d'effet obtenu sur le déphasage entre un signal présent sur la première voie de réception et un signal présent sur la deuxième voie de réception, et donc sur la mesure de la distance. Les mesures étant réalisée à partir de la différence de phase entre les signaux présents sur chacune des voies, chaque voie reçoit un signal dont la fréquence moyenne est comprise entre la première et là deuxième fréquence, à la fréquence Doppler prés de la cible, c'est à dire en fait que le signal reçu dans la première voie est constitué d'une partie de séquence à la deuxième fréquence F2 puis d'une partie de séquence à la première fréquence F1, et réciproquement pour le signal reçu sur la deuxième voie.

Dans l'exemple de la figure 4, un retard limite $\tau_{lim}$ est déterminé a priori. Un retard $\tau$ correspond au temps d'aller-retour d'un signal émis vers une cible. Tous les retard $\tau$ inférieurs à ce retard $\tau_{lim}$ correspondent à des petites distances inférieures à une distance limite $d_{lim}$. Cette distance limite correspond au retard limite $\tau_{lim}$. Ce retard $\tau_{lim}$ entre l'instant d'établissement de l'onde émise à une fréquence F1, F2 et l'instant de réception du signal correspondant, reçu depuis une cible située à la distance $d_{lim}$, est supérieur au temps Tav précité. Ce temps Tav correspond au temps entre l'établissement d'une fréquence F1, F2 et l'ouverture de sa voie de réception 38, 39 correspondante. Ce temps Tav sera par la suite appelé retard à l'ouverture du récepteur et les retard $\tau$ précités seront appelés retards à la réception, $\tau_{lim}$ étant appelé retard limite. Ce retard est connu a priori. Dans un cas selon l'art antérieur tel qu'illustré par la figure 1, le retard limite $\tau_{lim}$ est inférieur au temps Tav. Dans le cas par exemple d'une application à un circuit selon la figure 3, le signal provenant du mélangeur 33 est démultiplexé sur les deux voies de réception 38, 39 selon le chronogramme de la figure 4. Il est forcé à zéro en dehors des périodes d'ouverture des récepteurs. L'ouverture ou la fermeture de ces voies est obtenu en jouant par exemple sur la commande du commutateur 37. Les deux signaux résultant de cette opération sont traités par deux transformées de Fourier rapides FFT. La différence de phase est par exemple mesurée dans le filtre Doppler correspondant à la valeur absolue de la vitesse de la cible, le signal étant par exemple supposé parfaitement centré dans le filtre Doppler concerné. Pour faire en sorte que le retard à la réception limite $\tau_{lim}$ puisse être supérieur au retard à l'ouverture Tav, l'ouverture de la voie associée à une fréquence peut être réalisée avant l'arrivée du signal reçu correspondant

Dans le cas de la figure 1, lorsque le retard limite $\tau$ est inférieur au retard à l'ouverture Tav, le premier récepteur 38 ne reçoit que le signal associé à la fréquence F1. De même, le deuxième récepteur 39 ne reçoit que le signal associé à la fréquence F2.

Dans le cas de la figure 4, lorsque le retard $\tau$ est supérieur au retard à l'ouverture Tav du récepteur, la fin de la séquence émise à la deuxième fréquence F2 pénètre au début de la séquence d'ouverture 3 du premier récepteur 38 et de même, la fin de la séquence émise à la première fréquence F1 pénètre au début de la séquence d'ouverture 4 du deuxième récepteur 39. Tant que le retard $\tau$ reste inférieur au retard à la fermeture Tar, la fin de la séquence d'ouverture 3 du premier récepteur contient du signal émis à la première fréquence F1. De même, la fin de la séquence d'ouverture 4 du deuxième récepteur contient du signal émis à la deuxième fréquence F2. La fréquence moyenne du signal intégré dans la fenêtre d'ouverture 41 du premier récepteur est comprise entre la première fréquence F1 et la deuxième fréquence F2. Lorsque le retard $\tau$ est supérieur à la durée Tr d'émission à une fréquence F1, F2 le signal associé à la première fréquence F1 tend à être reçu sur le deuxième récepteur et réciproquement.

Les essais et les calculs effectués par la Déposante ont montré qu'en jouant sur la durée du retard à l'ouverture Tav et de la durée d'émission d'une fréquence en fonction du retard limite $\tau_{lim}$ à la réception, les domaines $D_{a1}$, $D_{a2}$ précédemment définis de distances non ambiguës peuvent être agrandis. En d'autres termes, en jouant sur la position relative dans le temps des émissions à F1 ou F2 et des fenêtres de réception 41, 42 des signaux reçus correspondant, cela permet de repousser la montée du déphasage $\Delta\varphi$ entre ces signaux reçus comme l'illustre la figure 5. Dans cette figure, comme dans la figure 2, une première courbe 22 en trait discontinu représente la distance estimée en fonction de la distance réelle relativement à un chronogramme selon la figure 1 lorsque le retard $\tau$ est inférieur au retard à l'ouverture Tav. Dans ce cas, il n'y a pas, à l'intérieur d'une fenêtre de réception, de mélange entre les fréquences F1, F2.

Lorsque le retard $\tau$ est compris entre le retard à l'ouverture Tav et le retard à la fermeture Tar, la fin de la séquence émise à la deuxième fréquence F2 pénètre au début de la séquence d'ouverture du premier récepteur. Un mélange de signal à la deuxième fréquence F2 puis à la première fréquence F1 est ainsi intégré, le mélange variant de 100% de F1 et 0% de F2 à 0% de F1 et 100% de F2. Le phénomène réciproque a lieu pour le deuxième récepteur. Dans ce cas, le déphasage $\Delta\varphi$ suit une deuxième courbe 51 en trait plein dont la montée est retardée par rapport à la première courbe 22 précitée. Le point de rebroussement de la deuxième courbe 51 est alors repoussé vers les distances plus éloignées par rapport au point de rebroussement R de la première courbe 22. De la sorte, les distances ambiguës qui se situent sur la pente négative de la courbe, sont éloignées. Elles peuvent ainsi être plus facilement éliminées par exemple par un test de puissance reçue, c'est-à-dire que si à une mesure de distance correspond deux signaux reçus, celui de plus faible puissance peut être éliminé sans risque d'erreur.

La figure 5 montre que la deuxième courbe 51 peut devenir rapidement non linéaire et donc fausser les mesures de distances, c'est le cas notamment si le retard à la montée du déphasage commence trop tôt. En effet, lorsqu'un retard à la réception est compris entre 0 et Tav, la relation entre le déphasage $\Delta\varphi$, représenté en ordonnées, et la distance réelle, représenée en abscisses, est linéaire. Lorsque le retard à la réception $\tau$ est compris entre le retard à l'ouverture Tav et le retard limite $\tau_{lim}$, cette relation devient non linéaire. Pour éviter cela et conserver une zone sensiblement linéaire relativement importante, il est possible par exemple de jouer sur la durée d'émission Tr à chaque fréquence F1, F2, c'est-à-dire sur la fréquence de commutation d'un signal d'émission à l'autre. Les essais réalisés par la déposante ont montré qu'une zone sensiblement linéaire pouvait être obtenue en choisissant une fréquence de commutation 1/Tr entre les signaux d'émission du même ordre de grandeur que la différence des deux fréquences F1, F2, soit 1/Tr voisine de F2 - F1. Lorsque la fréquence de commutation 1/Tr et les fréquences F1, F2 des signaux émis vérifient la relation suivante :

$$0{,}5\times(F1 - F2) \leq 1/Tr \leq 2\times(F1 - F2) \qquad (5)$$

une zone de linéarité suffisante de la courbe permet d'exploiter les mesures estimées selon la deuxième courbe 51.

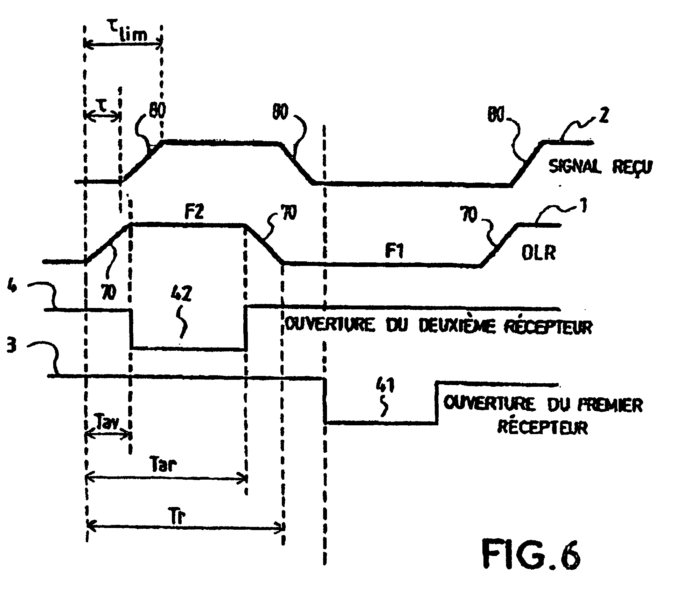

La figure 6 illustre un autre exemple de mise en oeuvre possible du procédé selon l'invention. Dans cet exemple, les fronts de commutation 70 d'une fréquence à l'autre sont couchés, c'est-à-dire que les changements de fréquence s'effectuent progressivement. La commutation de fréquence du signal reçu 2 suit la même de variation que celle du signal émis, en conséquence ses fronts de commutation de fréquence 80 sont aussi couchés. Ainsi, un signal de fréquence différente de la deuxième fréquence F2 est reçu pendant l'ouverture de la deuxième voie de récepüon et par cette voie de réception. Pour cela, il n'est pas nécessaire que le retard limite à la réception $\tau_{lim}$ soit supérieur au retard à l'ouverture Tav. En fait, c'est le retard $\tau'_{lim}$ d'établissement limite du signal de réception qui est supérieur au retard à l'ouverture Tav. Réciproquement, un signal de fréquence différente de la première fréquence F1 est reçu par la première voie de réception. Un effet de mélange analogue à ce qui a été décrit relativement à l'exemple de la figure 4 se produit dans la mesure où comme dans le cas de cette figure, chaque voie de réception 38,39 reçoit un signal dont la fréquence est comprise entre la première et la deuxième fréquence, à la fréquence Doppler près de la cible détectée. En particulier, comme le montre la figure 5, la montée du déphasage $\Delta\varphi$ est retardée. Les fronts de commutation de fréquence peuvent être réalisés simplement en insérant un circuit de retard, par exemple une résistance et un condensateur, dans la commande de tension du générateur d'onde 35, celui-ci étant généralement un composant commandé en tension. Ce générateur est par exemple connu sous l'appellation VCO selon l'expression anglo-saxonne « Voltage Control Oscillator ».

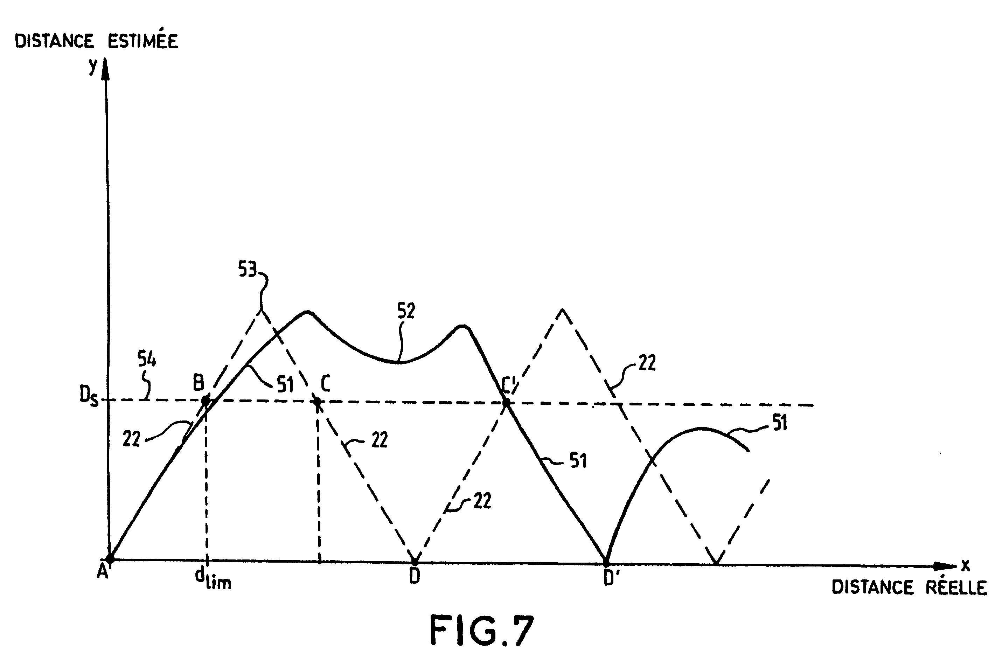

La figure 7 illustre un exemple d'allure de distance estimée en fonction de la distance réelle, dans un cas selon l'invention où le retard $\tau$ est compris entre le retard à l'ouverture Tav et le retard à la fermeture Tar, la fréquence de commutation 1/Tr étant par ailleurs du même ordre de grandeur que F1 - F2. L'exemple concerne un cas d'utilisation d'un mélangeur simple ou réel, c'est à dire un cas où les mesures de phase ne peuvent être exploitées que sur l'intervalle d'ambiguïté $[0, \pi]$, l'invention s'applique cependant pour des récepteurs utilisant un récepteur complexe de type BLU. Elle s'applique par ailleurs aussi bien pour un récepteur homodyne que pour un récepteur hétérodyne. Comme indiqué relativement à la figure 2, une courbe 22 en traits discontinus représente la distance estimée en fonction de la distance réelle dans le cas d'une ambiguïté à $\pi$ près, la distance estimée étant obtenue selon la relation (1) et selon le chronogramme de la figure 1 où $\tau$ est inférieur au retard à l'ouverture Tav du récepteur. Une courbe 51 en trait plein représente la distance estimée en fonction de la distance réelle lorsque la distance estimée est obtenue en fonction de la relation (1) selon un chronogramme du type de celui de la figure 4 où Tav < $\tau_{lim}$ < Tar.

Cette dernière courbe 51 correspond par exemple au cas où le retard à la fermeture Tav est égal à la durée d'émission Tr, et où ces deux temps vérifient la relation suivante :

$$Tr\Delta F\text{-}1 \leq Tav\Delta F \leq 2 - Tr\Delta F \qquad (6)$$

où $\Delta F$= F1-F2 , F1 et F2 représentent les première et deuxième fréquences précitées. La figure 7 illustre un cas où par exemple :

- Tav = 0,4 / ΔF
- Tr = Tar
- 1/Tr = 1,2 / ΔF

La courbe 51 présente un triangle arrondi dont la pointe 52 en fond de vallée est renversée par rapport à la limite d'ambiguïté 53 maximale de π. Cette courbe 51 montre que par rapport à une solution classique représentée par la courbe en traits discontinus 22, l'invention permet notamment de repousser les distances ambiguës.

Un seuil de distance estimée Ds peut par exemple être défini pour sélectionner les distances, les distances retenues étant celles en dessous du seuil. Les distances qui ne sont pas ambiguës sont alors représentée par un tronçon de courbe en trait plein 51 ou de courbe en traits discontinus 22 compris entre un point A situé à l'origine de la courbe et un point B qui est le premier point d'intersection de la courbe 51 et d'une droite parallèle à l'axe des abscisses représentant les distances réelles et d'ordonnée égale au seuil Ds précité. Ce tronçon AB a une pente positive. Il représente les distances non ambiguës. Pour un retard à la réception $\tau$ inférieur à $\tau_{lim}$, la courbe 51 est linéaire. Lorsque ce retard $\tau$ est compris entre le retard à l'ouverture Tav et le retard limite $\tau_{lim}$, la courbe 51 devient non linéaire. Cependant, le retard $\tau_{lim}$ est par exemple choisi pas très supérieur au retard à l'ouverture Tav, pour limiter la zone de non linéarité. Par ailleurs, il est aisé, par des moyens connus de linéariser la partie de courbe 51 non linéaire, comprise entre les points A et B. Les estimations se font alors sur la relation linéarisée, entre la distance estimée et la distance réelle.

Pour la courbe en trait discontinu 22, les distances ambiguës les plus proches sont représentées par un tronçon de courbe 22 de pente négative compris entre un point C, deuxième point d'intersection entre la courbé 22, et un point D, deuxième point d'intersection de la courbe 22 avec l'axe des abscisses.

Pour la courbe en trait plein 51, les distances ambiguës les plus proches sont représentées par un tronçon de courbe 51 de pente négative compris entre un point C', deuxième point d'intersection entre la courbe 51, et un point D', deuxième point d'intersection de la courbe 51 avec l'axe des abscisses. Le tronçon d'ambiguïté C'D' relatif à cette courbe 51 est nettement plus éloigné en distance que celui CD relatif à la précédente courbe 22. Les mesures de distance ambiguës peuvent donc être plus facilement discriminées, par exemple par des tests sur les puissances reçues.

Les distances estimées retenues sont celles qui sont inférieures ou égales au seuil Ds précité, ce qui permet de mesurer des distances comprises entre 0 et $d_{lim}$, définie précédemment comme correspondant au retard limite $\tau_{lim}$. Cette distance limite $d_{lim}$ définit une zone utile. Elle est donc, avec le retard limite $\tau_{lim}$, imposée par l'application. Seuls sont par exemple retenus comme non ambigües les distances correspondant à des retards $\tau$ inférieurs au retard limite $\tau_{lim}$. Le seuil Ds correspondant à la distance limite $d_{lim}$, peut être par exemple avoir une valeur de l'ordre de 200 mètres. Le seuil Ds est choisi inférieur au point de rebroussement de la courbe 51, et en dessous du point de fond de vallée 52, lorsque ce demier phénomène se produit. Le seuil Ds peut encore être choisi de façon à améliorer le pouvoir de discrimination entre une cible réelle et une cible ambiguë, notamment en l'abaissant. En contrepartie, la portée du radar pour la résolution en distance est réduite.

L'invention est simple à mettre en oeuvre dans la mesure où la levée d'ambiguïté s'obtient par exemple en jouant simplement sur des positionnements dans le temps de fenêtres d'ouverture ainsi que sur des fréquences de commutation d'un signal à l'autre ou sur les formes d'ondes émises. Par ailleurs, elle s'adapte à plusieurs types de réceptions, qu'elles soient homodynes ou hétérodynes, à mélangeur simple ou à mélangeur de type BLU.

Enfin, elle peut par ailleurs être appliquée à des radars fonctionnant en onde millimétrique, équipant par exemple des automobiles, et cela notamment grâce à la simplicité et au faible coût de mise en oeuvre.

**Revendications**

1. Procédé de levée d'ambiguïté sur les mesures en distance effectuée par un radar à onde continue, le radar émettant un signal commuté entre une première fréquence (F1) et une deuxième fréquence (F2) et recevant les signaux renvoyés par une cible sur deux voies de réception (38,39, 41, 42) associées chacune à une fréquence (F1,F2), **caractérisé en ce que** les mesures sont réalisées à partir de la différence de phase (Δφ) entre les signaux présents sur chacune des voies, un retard à la réception ($\tau$) étant le retard entre l'instant d'établissement du signal émis à une fréquence (F1, F2) et l'instant de réception du signal correspondant, reçu de la cible à une distance donnée, un retard limite ($\tau_{lim}$) correspondant à une distance limite ($d_{lim}$), est défini supérieur au retard à l'ouverture (Tav) de la voie de réception associée à la fréquence pour repousser la montée de la différence de phase (Δφ) en fonction de la distance réelle, les signaux non ambigus étant ceux dont le retard à la réception ($\tau$) est inférieur ou égal au retard limite ($\tau_{lim}$).

2. Procédé selon la revendication 1, **caractérisé en ce que** les changements de fréquence s'effectuant progressivement, le retard limite à prendre en compte est le retard d'établissement limite ($\tau'_{lim}$) du signal reçu.

3. Procédé selon l'une quelconque des revendications précédentes, **caractérisé en ce que** la fréquence de commutation (1/Tr) entre les signaux émis est voisine de la différence des deux fréquences (F1, F2).

4. Procédé selon la revendication 3, **caractérisé en ce que** la fréquence de commutation (1/Tr) et les fréquences (F1, F2) des signaux émis vérifient la relation suivante :

$$0,5 \times (F1 - F2) \leq 1/Tr \leq 2 \times (F1 - F2)$$

où 1/Tr représente la fréquence de commutation et F1, F2 respectivement les première et deuxième fréquences.

5. Procédé selon l'une quelconque des revendications précédentes, **caractérisé en ce que** le retard à la fermeture (Tar) d'une voie de réception est sensiblement égal à la durée d'émission (Tr) à une fréquence.

6. Procédé selon l'une quelconque des revendications précédentes, **caractérisé en ce que** le récepteur du radar comporte un mélangeur réel (33).

7. Procédé selon l'une quelconque des revendications précédentes, **caractérisé en ce que** le récepteur du radar est de type homodyne.

8. Procédé selon l'une quelconque des revendications précédentes, **caractérisé en ce que** le radar fonctionne en ondes millimétriques.

**Patentansprüche**

1. Verfahren, um die Mehrdeutigkeit bei Entfernungsmessungen durch ein Radargerät zu beheben, das eine kontinuierliche Welle aussendet, nämlich ein Signal, das zwischen einer ersten Frequenz (F1) und einer zweiten Frequenz (F2) umgeschaltet wird, wobei die von einem Ziel reflektierten Signale auf zwei je einer dieser Frequenzen (F1, F2) zugeordneten Empfangskanälen (38, 39, 41, 42) empfangen werden, **dadurch gekennzeichnet, daß** die Messungen aufgrund der Phasendifferenz ($\Delta\_$) zwischen den auf jedem der Kanäle vorliegenden Signalen durchgeführt wird, wobei eine Verzögerung ($\tau$) beim Empfang die Verzögerung zwischen dem Zeitpunkt des beginns der Aussendung des Signals mit einer Frequenz (F1, F2) und dem Zeitpunkt des Empfangs des entsprechenden Signals vom Ziel in einer bestimmten Entfernung entspricht, und daß eine Grenzverzögerung ($\tau_{lim}$) entsprechend einer Grenzentfernung ($d_{lim}$) definiert wird, die größer als die Verzögerung (Tav) beim Öffnen des der Frequenz zugeordneten Empfangskanals ist, um den Anstieg der Phasendifferenz (A\_) abhängig von der wirklichen Entfernung hinauszuschieben, wobei die nicht mehrdeutigen Signale diejenigen sind, deren Verzögerung ($\tau$) beim Empfang kleiner/gleich der Grenzverzögerung ($\tau_{lim}$) ist.

2. Verfahren nach Anspruch 1, **dadurch gekennzeichnet, daß** die Frequenzwechsel progressiv erfolgen und daß die zu berücksichtigende Grenzverzögerung die Grenzverzögerung ($\tau'_{lim}$) der Bildung des Empfangssignals ist.

3. Verfahren nach einem beliebigen der vorstehenden Ansprüche, **dadurch gekennzeichnet, daß** die Umschaltfrequenz (1/Tr) zwischen den Sendesignalen der Differenz zwischen den beiden Frequenzen (F1, F2) nahekommt.

4. Verfahren nach Anspruch 3, **dadurch gekennzeichnet, daß** die Umschaltfrequenz (1/Tr) und die Frequenzen (F1, F2) der ausgesendeten Signale durch folgende Beziehung verbunden sind: 0,5. (F2-F1) $\leq$ 1/Tr $\leq$ 2.(F2-F1)
wobei 1/Tr die Umschaltfrequenz und F1, F2 die erste beziehungsweise zweite Frequenz bilden.

5. Verfahren nach einem beliebigen der vorstehenden Ansprüche, **dadurch gekennzeichnet, daß** die Verzögerung (Tar) beim Schließen eines Empfangskanals im wesentlichen der Sendedauer (Tr) bei einer Frequenz gleicht.

6. Verfahren nach einem beliebigen der vorstehenden Ansprüche, **dadurch gekennzeichnet, daß** der Empfänger des Radargeräts eine reelle Mischstufe (33) enthält.

7. Verfahren nach einem beliebigen der vorstehenden Ansprüche, **dadurch gekennzeichnet, daß** der Empfänger des Radargeräts vom homodynen Typ ist.

8. Verfahren nach einem beliebigen der vorstehenden Ansprüche, **dadurch gekennzeichnet, daß** das Radargerät im Millimeterwellenbereich arbeitet.

**Claims**

1. Method for removing ambiguity from the distance measurements made by a continuous-wave radar system, the radar system transmitting a signal switched between a first frequency (F1) and a second frequency (F2) and receiving the signals returned by a target on two receiving channels (38, 39, 41, 42), each associated with one frequency (F1, F2), **characterized in that** the measurements are made on the basis of the phase difference ($\Delta\varphi$)

between the signals present on each of the channels, a reception delay ($\tau$) being the delay between the moment of establishment of the signal transmitted at one frequency (F1, F2) and the moment of reception of the corresponding signal received from the target at a given distance, a limit delay ($\tau_{lim}$) corresponding to a limit distance ($d_{lim}$) is defined as greater than the opening delay (Tav) of the receiving channel associated with the frequency, in order to push back the rise in the phase difference ($\Delta\varphi$) as a function of the actual distance, the non-ambiguous signals being those of which the reception delay ($\tau$) is below or equal to the limit delay ($\tau_{lim}$).

2. Method according to Claim 1, **characterized in that**, with the frequency changes taking place progressively, the limit delay to be taken into account is the limit delay ($\tau'_{lim}$) in the establishment of the signal received.

3. Method according to either one of the preceding claims, **characterized in that** the switching frequency (1/Tr) between the transmitted signals is close to the difference between the two frequencies (F1, F2).

4. Method according to Claim 3, **characterized in that** the switching frequency (1/Tr) and the frequencies (F1, F2) of the transmitted signals verify the following relation:

$$0.5 \times (F1 - F2) \leq 1/Tr \leq 2 \times (F1 - F2)$$

where 1/Tr represents the switching frequency and F1, F2 represent the first and second frequencies respectively.

5. Method according to any one of the preceding claims, **characterized in that** the closing delay (Tar) of a receiving channel is substantially equal to the transmission duration (Tr) at one frequency.

6. Method according to any one of the preceding claims, **characterized in that** the receiver of the radar system comprises a real mixer (33).

7. Method according to any one of the preceding claims, **characterized in that** the receiver of the radar system is of the homodyne type.

8. Method according to any one of the preceding claims, **characterized in that** the radar system operates on millimetre waves.

FIG.1

EP 0 991 953 B1

FIG.2

FIG.3

EP 0 991 953 B1

FIG.4

FIG.5

EP 0 991 953 B1

FIG.6

$\tau_{lim}$

$\tau$

80   80   80   2

SIGNAL REÇU

F2   70   70   1

F1   OLR

70

4   70

42

OUVERTURE DU DEUXIÈME RÉCEPTEUR

3

41

OUVERTURE DU PREMIER RÉCEPTEUR

Tav

Tar

Tr

EP 0 991 953 B1

FIG.7